# DEMANDE DE BREVET EUROPEEN

(11) **EP 1 443 702 A1**
(43) Date de publication de la demande: **04.08.2004**
(21) Numéro de dépôt: 04290194.2
(22) Date de dépôt: 12.01.2004
(51) Int. Cl.: H04L 12/24, H04L 12/46

(54) **Dispositif perfectionné de gestion d'équipements hétérogènes de réseau de communications**

(30) Priorité: 31.01.2003 FR 0301102
(71) Demandeur: ALCATEL, 75008 Paris (FR)
(72) Inventeur: Bergeot, Patrick, 92160 Antony (FR); Lapraye, Bertrand, 91190 Gif sur Yvette (FR); Villeret, Pascal, 92140 Clamart (FR); Chevanne, Michel, 92140 Clamart (FR)
(74) Mandataire: Chaffraix, Sylvain

(57) **Abrégé**

Un dispositif de gestion (D), pour un réseau de communications comportant une multiplicité d'équipements de réseau associés chacun à un protocole de gestion de données primaires, comprend, d'une part, des moyens de médiation (MM) couplés aux équipements et à des moyens d'interface fonctionnelle (MIF) et à des moyens d'interface système (MIS) couplés à un système de gestion de réseau, et d'autre part, des modules d'adaptation de protocole (PA-j), en nombre au moins égal au nombre de protocoles de gestion associés aux équipements. Les modules d'adaptation de protocole (PA-j) sont chargés chacun i) de transformer des données primaires, provenant d'un équipement (NE-ij) selon un protocole de gestion, en données secondaires adaptées aux moyens de médiation (MM), et ii) de transformer des données secondaires, destinées à un équipement (NE-ij), en données primaires selon un protocole de gestion adapté à cet équipement. Par ailleurs, les moyens de médiation (MM) sont agencés, lorsqu'ils reçoivent des données primaires ou secondaires, pour déterminer l'équipement (NE-ij) associé puis alimenter le module d'adaptation de protocole (PA-j) correspondant à l'équipement déterminé afin qu'il procède à la transformation de données.

## Description

L'invention concerne le domaine de la gestion d'équipements (ou éléments) d'un réseau de communications par un système de gestion de réseau.

Les réseaux de communications sont généralement équipés d'un système de gestion de réseau (ou NMS pour « Network Management System »), également appelé système d'exploitation du réseau, permettant à leur gestionnaire (ou superviseur) de gérer les équipements (ou éléments) qui les constituent, et qui sont incapables de le faire eux-mêmes. Pour ce faire un système de gestion NMS intègre, ou est couplé à, des outils mettant en oeuvre des fonctions et des services, également appelés OAM&P (pour « Operations, Administration, Maintenance and Provisioning »). Parmi ces outils, on peut notamment citer les systèmes de gestion d'éléments (ou EMS pour « Element Management System ») chargés d'assurer l'interface de dialogue entre les équipements de réseau et le système de gestion NMS.

On entend ici par « équipement de réseau» tout type de matériel, comme par exemple des serveurs, des terminaux, des commutateurs, des routeurs ou des concentrateurs, capable d'échanger des données, notamment de gestion, selon un protocole de gestion de réseau avec le système de gestion NMS, comme par exemple le protocole SNMP (pour « Simple Network Management Protocol » RFC 2571-2580) utilisé notamment dans les réseaux de type ADSL, le protocole TL1 utilisé notamment dans les réseaux de type SONET, le protocole Q3 utilisé notamment dans les réseaux de type SDH, ou encore les protocoles CLI et CORBA.

En raison de leur architecture, les systèmes de gestion d'éléments EMS actuels ne font office d'interface de dialogue que pour des équipements (ou éléments) associés à un même protocole de gestion. De plus, ils ne font office d'interface de dialogue que pour des systèmes de gestion de réseau NMS d'un type donné, associé à un protocole de gestion donné.

L'hétérogénéité toujours croissante des équipements d'un réseau et des protocoles de gestion associés impose donc une mise en parallèle de systèmes de gestion d'éléments EMS entre le système de gestion de réseau NMS et les différents équipements. Cela ne facilite ni la tâche des concepteurs de réseaux, ni celle des gestionnaires de réseau.

De plus, chaque fois qu'un nouveau protocole de gestion apparaît au sein d'un réseau, il faut concevoir un nouveau système de gestion d'éléments EMS, puis adapter le système de gestion du réseau NMS afin qu'il puisse dialoguer avec lui. Cela requiert souvent plusieurs mois de développement et accroît notablement le coût de la gestion d'un réseau.

En outre, chaque fois que l'un des systèmes de gestion d'éléments EMS d'un réseau tombe en panne, le système de gestion de réseau NMS ne peut plus dialoguer avec les équipements dont il assure l'interface de dialogue.

Enfin, lorsqu'un nouveau système de gestion de réseau NMS apparaît, il est généralement nécessaire de développer à son attention de nouveaux systèmes de gestion d'éléments EMS.

L'invention a donc pour but de remédier à tout ou partie des inconvénients précités.

Elle propose à cet effet un dispositif de gestion, pour un réseau de communications comportant une multiplicité d'équipements de réseau associés chacun à un protocole de gestion de données primaires ; ce dispositif comprenant des moyens de médiation couplés, d'une part, aux équipements, et d'autre part, à des moyens d'interface fonctionnelle et à des moyens d'interface système, eux-mêmes couplés à un système de gestion de réseau (NMS).

Ce dispositif se caractérise par le fait qu'il comprend des modules d'adaptation de protocole, en nombre au moins égal au nombre de protocoles de gestion associés à ces équipements, et chargés chacun, d'une part, de transformer des données primaires, provenant d'un équipement selon un protocole de gestion, en données secondaires adaptées aux moyens de médiation (et donc au système de gestion de réseau NMS), et d'autre part, de transformer des données secondaires, destinées à un équipement, en données primaires selon un protocole de gestion adapté à cet équipement, et par le fait que ses moyens de médiation sont chargés, lorsqu'ils reçoivent des données primaires ou secondaires, de déterminer l'équipement associé à ces données puis d'alimenter le module d'adaptation de protocole correspondant à l'équipement déterminé afin qu'il procède à la transformation de données.

De la sorte, il est possible d'échanger des données (ou informations) de gestion entre les moyens de médiation et chacun des équipements, indépendamment du protocole de gestion qui leur est associé. Par conséquent, un unique dispositif de gestion sert d'interface de dialogue entre les équipements d'un réseau et le système de gestion de ce réseau (NMS). Un tel dispositif de gestion peut ainsi avantageusement remplacer une multiplicité de systèmes de gestion d'éléments EMS.

Selon une autre caractéristique de l'invention, les moyens de médiation sont capables, lorsqu'ils reçoivent une demande désignant l'un des équipements, de générer un arbre d'informations de gestion, également appelé MIT pour « Management Information Tree », représentatif notamment des liens de cet équipement désigné avec les autres équipements du réseau.

Dans ce cas, et lorsque le dispositif comprend également un module d'interface graphique configurable (par exemple de type GUI, pour « Graphical User Interface ») couplé à ses moyens de médiation, ces derniers sont préférentiellement agencés, une fois qu'ils ont fini de générer l'arbre d'informations de gestion, de manière à configurer le module d'interface graphique en fonction de données auxiliaires représentatives de l'équipement désigné. Ces données auxiliaires proviennent préférentiellement de modules de description implantés dans le dispositif de gestion et associés chacun à l'un des équipements. De tels modules de données de description peuvent être constitués d'au moins un descripteur comprenant de préférence au moins un fichier de codes de programme, et au moins un fichier de configuration. Ces fichiers de codes de programme comportent préférentiellement des premières données désignant un type auquel appartient un équipement de réseau, ou des secondes données désignant une définition de base d'informations de gestion (ou MIB pour « Management Information Base ») associée à un équipement.

Préférentiellement, le module d'interface graphique et les moyens de médiation sont couplés par un bus de type CORBA.

Par ailleurs, les moyens d'interface fonctionnelle peuvent être implantés dans le dispositif de gestion et comprendre un module d'alimentation (également appelé « provisioning interface ») chargé d'extraire sur ordre, par exemple du système de gestion de réseau NMS, des informations de gestion, concernant un équipement et contenues dans l'arbre de gestion (MIT), pour les transmettre à cet équipement. Un tel module d'alimentation comprend préférentiellement des fichiers de codes de programmes encapsulés dans des modules de type « north-plug » (c'est-à-dire assurant une communication vers le haut (vers le NMS)). Il peut être en outre capable de générer un canal de communication dédié au transport de codes choisis, par exemple de type ASCII, entre au moins une plaque de connexion (ou « socket ») et les moyens de médiation.

En outre, les moyens d'interface fonctionnelle peuvent également comprendre un module de supervision (également appelé « supervision interface ») agencé sous la forme d'une interface publique de type IDL et chargé de permettre au système de gestion de réseau NMS d'administrer les équipements et de gérer des alarmes et des événements provenant de ces équipements.

Les moyens d'interface système peuvent être également implantés dans le dispositif de gestion et comprendre un module de navigation (également appelé « navigation interface ») agencé de manière à permettre au système de gestion de réseau NMS de contrôler, d'une part, le module d'interface graphique configuré par les moyens de médiation, et d'autre part lesdits moyens de médiation.

Ces moyens d'interface système peuvent également comprendre un module de persistance permettant, par exemple sous le contrôle du système de gestion de réseau NMS, la mémorisation de certaines données d'information contenues dans l'arbre d'informations de gestion (MIT) et relatives à des équipements associés à un niveau de priorité choisi. Un tel module de persistance comprend notamment une interface de programmation d'application (ou API pour « Application Programming Interface »), en particulier de type JDBC.

L'un au moins des moyens de médiation, module d'interface graphique configurable, moyens d'interface fonctionnelle, et moyens d'interface système, et de préférence tous, est constitué de fichiers de codes de programme, par exemple en langage Java.

L'invention porte également sur un serveur de gestion d'un système de gestion de réseau et sur un équipement de réseau équipés chacun d'un dispositif de gestion du type de celui présenté ci-avant.

L'invention peut notamment être mise en oeuvre dans toutes les technologies réseaux qui doivent être gérées, et notamment dans les réseaux de transmission (par exemple de type WDM, SONET, SDH), les réseaux de données (par exemple de type Internet-IP ou ATM) ou les réseaux de voix (par exemple de type classique, mobile ou NGN).

D'autres caractéristiques et avantages de l'invention apparaîtront à l'examen de la description détaillée ci-après, et des dessins annexés, sur lesquels :
- la figure 1 illustre de façon schématique un exemple de réseau de communications équipé d'un dispositif de gestion selon l'invention, implanté dans un serveur de gestion,
- la figure 2 illustre de façon schématique un exemple de réalisation d'un dispositif de gestion selon l'invention, et
- la figure 3 détaille schématiquement un exemple de réalisation du module de traitement EMA du dispositif de gestion illustré sur la figure 2.

Cette figure pourra non seulement servir à compléter l'invention, mais aussi contribuer à sa définition, le cas échéant.

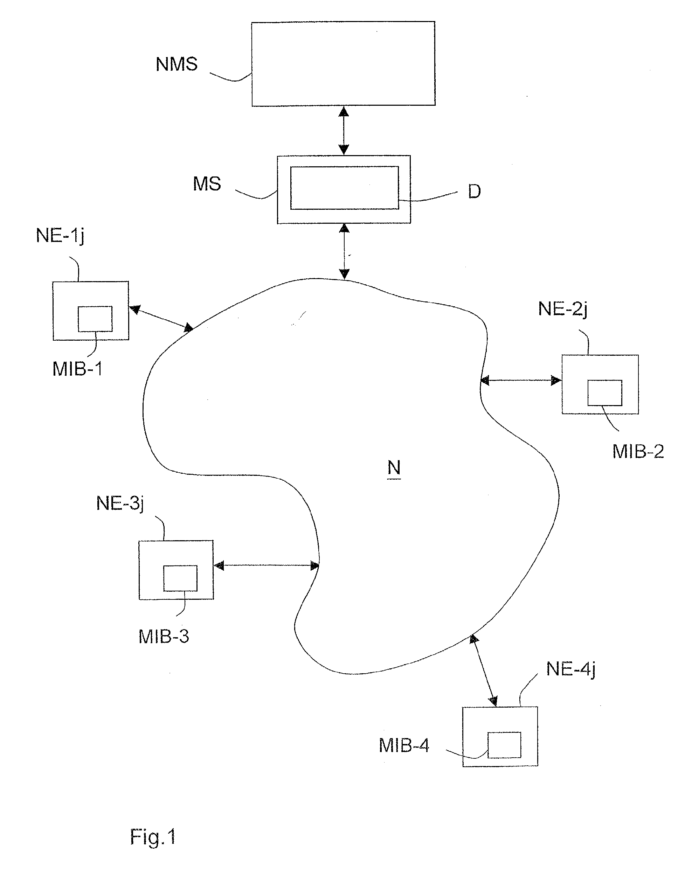

Comme cela est illustré schématiquement sur la figure 1, un réseau de communications N (ici matérialisé par une « patate ») est constitué d'une multiplicité d'équipements (ou éléments) de réseau NE-ij (ici i = 1 à 4, à titre d'exemple), reliés les uns aux autres par des moyens de communications et raccordés, au moins pour certains d'entre eux, à un système de gestion de réseau (ou NMS pour « Network Management System »), via un serveur de gestion MS. Le système de gestion de réseau NMS est destiné à permettre au gestionnaire (ou superviseur) du réseau de gérer et contrôler à distance les équipements NE-i auxquels il est couplé.

Par exemple, le réseau de communications N est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique, mobile ou NGN.

On entend ici par « équipement de réseau » NE-i un matériel capable d'échanger des données de gestion, ci-après appelées données primaires, selon un protocole de gestion choisi avec le serveur de gestion MS. Il s'agit, par exemple, de serveurs périphériques ou de coeur, de terminaux, de commutateurs, de routeurs ou de concentrateurs.

Les équipements peuvent être regroupés en familles (j) associées chacune à un protocole de gestion particulier, comme par exemple le protocole SNMP (pour « Simple Network Management Protocol » RFC 2571-2580), ou les protocoles TL1, CORBA, CLI ou Q3.

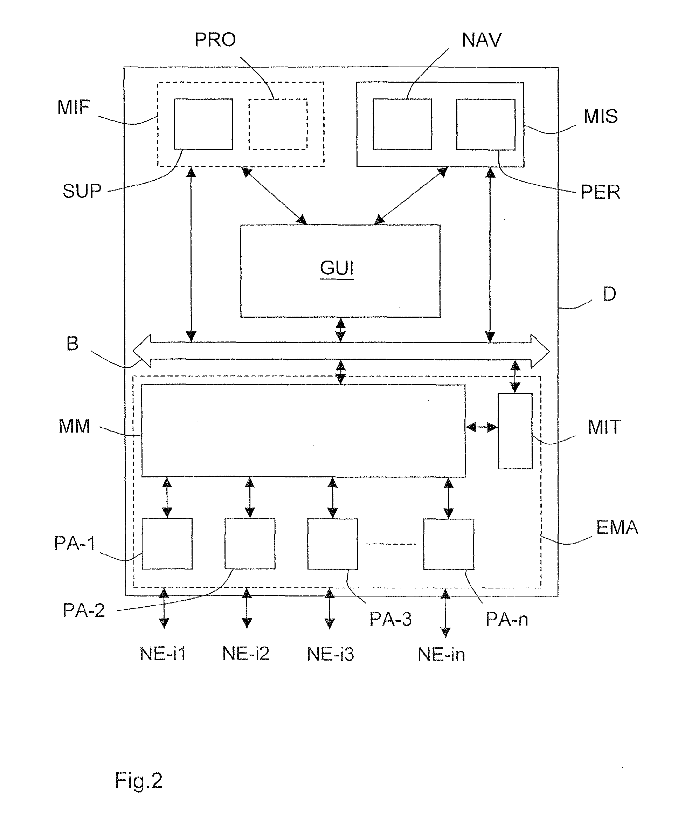

Afin de permettre à un unique serveur de gestion MS d'assurer une fonction d'interface de dialogue centralisée entre le système de gestion de réseau NMS et les divers équipements NE-ij du réseau N, l'invention propose un dispositif de gestion D, du type de celui illustré sur la figure 2.

Plus précisément, dans l'exemple illustré sur la figure 2, le dispositif D selon l'invention comporte un module de traitement EMA couplé, via un bus B, de préférence de type CORBA, à un module d'interface graphique, par exemple de type GUI (pour « graphical User Interface »), et à un module d'interface fonctionnelle MIF et un module d'interface système MIS. Le module d'interface système MIS et le module d'interface fonctionnelle MIF sont par ailleurs couplés au GUI ainsi qu'au système de gestion de réseau (NMS).

Il est important de noter que le module d'interface graphique GUI, et/ou le module d'interface fonctionnelle MIF et/ou le module d'interface système MIS peuvent ne pas être localisés au même endroit que le reste du dispositif. En effet, le module de traitement EMA peut être implanté dans un serveur de gestion MS ou dans un équipement de réseau, tandis que le module d'interface graphique GUI peut être implanté dans le système de gestion de réseau NMS.

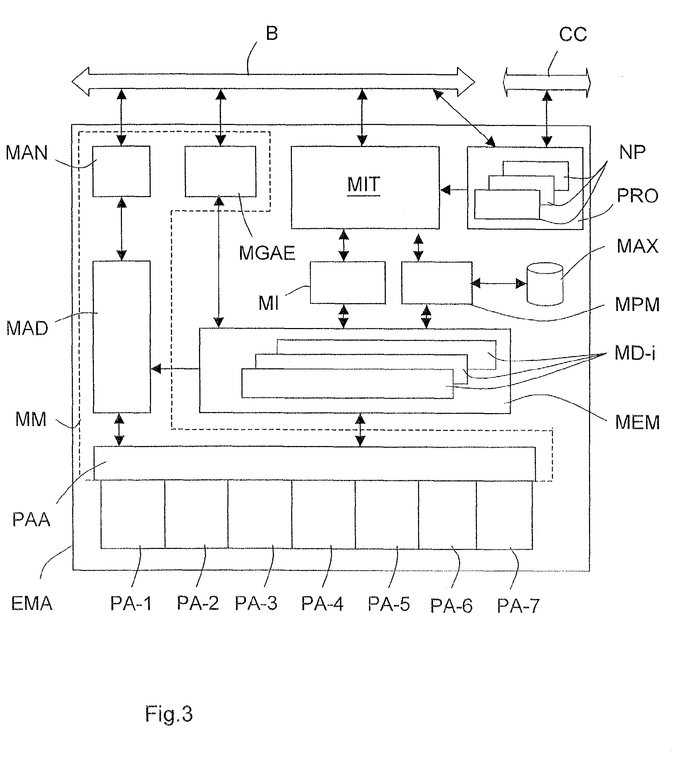

Un exemple de réalisation du module de traitement EMA est illustré sur la figure 3.

Ce module de traitement EMA comporte un module de médiation MM, chargé de faire dialoguer entre-elles les interfaces du réseau (et notamment celles des équipements) et couplé, d'une part, à un arbre d'informations de gestion MIT, et d'autre part, à des modules d'adaptation de protocole PA-j (ici j = 1 à n), en nombre au moins égal au nombre de protocoles de gestion associés aux différentes familles (j) d'équipements NE-ij du réseau N.

Le module de médiation MM comprend principalement un module de gestion d'alarme et d'événement MGAE, un module d'administration d'équipement MAN, un module serveur MAD d'accès à des modules de description stockés dans une mémoire MEM (sur laquelle on reviendra plus loin), et une interface PAA de programmation d'application (ou API) couplée à la mémoire MEM ainsi qu'aux modules d'adaptation de protocole PA-j.

Le module d'administration d'équipement MAN est couplé au bus CORBA B ainsi qu'au module serveur MAD. Il permet notamment au système de gestion NMS d'administrer les équipements NE-ij, avec l'assistance du module d'interface fonctionnelle MIF et du module d'interface système MIS.

Le module de gestion d'alarme et d'événement MGAE est couplé au bus CORSA B ainsi qu'à la mémoire MEM. Il permet notamment au système de gestion NMS de récupérer les données d'informations représentatives de l'état de fonctionnement des équipements, et notamment des alarmes et des comptes rendus d'événements survenus dans les équipements NE-ij, afin d'en assurer la gestion (par exemple en déclenchant des actions adaptées).

Le module serveur MAD est l'élément central du module de médiation MM. Sa fonction principale est décrite ci-après.

Chaque module d'adaptation de protocole PA-j est chargé de transformer, sur ordre du module serveur MAD, des données primaires, provenant d'un équipement NE-ij selon un protocole de gestion, en données secondaires adaptées au module de médiation MM, et réciproquement de transformer des données secondaires, destinées à un équipement NE-ij, en données primaires selon le protocole de gestion utilisé par cet équipement.

En d'autres termes, chaque fois que le système de gestion NMS souhaite adresser des données de gestion à un équipement NE-ij, il transmet lesdites données (sous la forme de données secondaires) au module de médiation MM qui détermine, grâce à son module serveur MAD, le module d'adaptation de protocole PA-j correspondant à cet équipement NE-ij. De même, chaque fois qu'un équipement NE-ij transmet des données primaires à destination du système de gestion NMS, le module de traitement EMA les réceptionne, puis les transmet au module serveur MAD afin qu'il détermine le module d'adaptation de protocole PA-j correspondant à cet équipement NE-ij.

Pour procéder à cette détermination, le module serveur MAD accède à des modules de description MD-p stockés dans la mémoire MEM du module de traitement EMA, associés chacun à au moins un élément d'un équipement NE-ij, (comme par exemple une carte à circuits intégrés ou une interface de connexion), et désignant notamment le protocole d'échange associé audit élément.

Ces modules de description MD-p sont préférentiellement agencés sous la forme de ce que l'homme de l'art appelle des descripteurs. Un descripteur est un module informatique qui contient toutes les données nécessaires à la gestion par le système de gestion NMS d'au moins un élément d'équipement. Chaque descripteur dédié MD-p est préférentiellement constitué d'au moins un premier fichier de codes de programmes permettant de discuter avec une interface d'équipement, un deuxième fichier contenant des données qui désignent un type d'équipement, et un troisième fichier contenant des données qui désignent une définition de base d'informations de gestion, ou définition de MIB (« Management Information Base »), associée à l'équipement NE-ij du type considéré, et d'au moins un fichier de configuration, par exemple de type XML, qui contient des informations permettant de gérer un type d'équipement du réseau.

Une définition de MIB répond, par exemple, au standard RFC 1213, dans le cas du protocole de gestion SNMP, et décrit généralement, pour l'équipement NE-ij concerné, tous ses attributs possibles, un type de données (string, integer, ...), l'organisation de nommage, le texte décrivant l'équipement (ou objet), les droits d'accès, la hiérarchie des objets (ou équipements), et analogue. Les définitions de MIB sont stockées dans le système de gestion NMS ou dans le module de traitement EMA et sont associées chacune à une base d'informations de gestion MIB-i, également appelée base d'instances d'objets, stockée dans l'équipement NE-ij correspondant. Chaque MIB-i comporte des champs d'information dont les valeurs spécifiques caractérisent l'équipement NE-ij associé et peuvent être accédées par une interface de navigation NAV (sur laquelle on reviendra plus loin).

Les fichiers de codes de programmes des descripteurs MD-p sont préférentiellement en langage Java, en raison de l'aptitude de ce langage à charger et décharger de façon dynamique des codes informatiques. Mais, d'autres langages peuvent être envisagés, comme par exemple Small Talk, dès lors qu'ils permettent le chargement et le déchargement dynamique de codes informatiques.

Une fois que le module serveur MAD a déterminé dans la mémoire MEM le protocole associé à l'équipement NE-ij, il en déduit le module d'adaptation de protocole PA-j qui lui correspond, puis il transmet à ce module d'adaptation de protocole PA-j, via l'interface de programmation PAA, les données primaires ou secondaires reçues afin qu'il les transforme en données secondaires selon le protocole de gestion utilisé par le système de gestion NMS ou en données primaires selon le protocole de gestion utilisé par l'équipement NE-ij. Les modules d'adaptation de protocole PA-j assurent ainsi, en quelque sorte, une traduction syntaxique.

On entend ici par « transmettre des données (primaires ou secondaires) à un module d'adaptation de protocole » aussi bien l'action de communiquer les données audit module que l'action de charger dynamiquement (au sens informatique du terme) le module d'adaptation de protocole dans le module de médiation MM (et plus précisément dans le module serveur MAD), puis de le faire tourner avec les données.

Dans l'exemple illustré sur la figure 3, sept (7) modules d'adaptation de protocole PA-1 à PA-7 ont été représentés. Les modules d'adaptation de protocole PA-1 et PA-2 correspondent par exemple à des protocoles propriétaires X et Y. Les modules d'adaptation de protocole PA-3 à PA-7 correspondent respectivement, par exemple, aux protocoles CORBA, CLl, TL1, SMNP et Q3. Tous ces modules d'adaptation PA-j sont préférentiellement couplés à l'interface de programmation PAA.

Grâce à la coopération entre les modules d'adaptation de protocole PA-j et le module de médiation MM, il est donc possible d'échanger des données (ou informations) de gestion entre le module de médiation (et par conséquent le système de gestion NMS) et chacun des équipements NE-ij, indépendamment du protocole de gestion qui leur est associé. En d'autres termes, les modules d'adaptation de protocole assurent un découplage entre le décodage syntaxique et l'exploitation sémantique. Par conséquent, pour intégrer une nouvelle famille d'équipement au sein du réseau, puis la gérer, il suffit au préalable d'implanter dans le module de traitement EMA un nouveau module d'adaptation de protocole PA-j qui lui correspond, sans qu'il faille procéder à des modifications de fond, notamment du module de médiation MM et de l'interface graphique GUI, ou bien ajouter un nouveau système de gestion d'éléments EMS au réseau.

De plus, lorsqu'un nouveau système de gestion NMS fait son apparition, il n'est plus nécessaire de concevoir spécifiquement plusieurs éléments de gestion EMS. Il suffit en effet d'adapter les modules d'adaptation de protocole PA-j du dispositif selon l'invention en fonction du protocole de gestion utilisé par le nouveau système de gestion NMS.

Par ailleurs, grâce à l'architecture proposée, le module de médiation MM est désormais capable de « générer », à partir d'un arbre d'informations de gestion MIT complet, stocké dans une mémoire du module de traitement, un arbre d'informations de gestion MIT partiel, représentatif d'un équipement et notamment des autres équipements du réseau auxquels il est lié.

En outre, il est particulièrement avantageux que le dispositif de gestion D comprenne un module d'interface graphique GUI de type configurable. Dans ce cas, le module de médiation MM peut en effet, lorsqu'il a fini de générer l'arbre d'informations de gestion MIT partiel correspondant à un équipement NE-ij désigné dans une requête reçue, configurer le module d'interface graphique GUI de sorte qu'il soit également adapté à la gestion de cet équipement par le système de gestion NMS.

Cette configuration s'effectue en fonction de données auxiliaires représentatives de l'équipement NE-ij désigné, provenant préférentiellement des modules de description MD-p contenus dans la mémoire MEM.

Préférentiellement, le module de traitement EMA du dispositif de gestion D (et notamment son module de médiation MM et ses modules d'adaptation de protocoles PA-j) sont réalisés sous la forme de modules logiciels ou informatiques (ou « software »), c'est-à-dire sous la forme de fichiers de codes de programme. Plus préférentiellement encore, ces fichiers de codes de programmes sont en langage Java, en raison de l'aptitude de ce langage à charger et décharger de façon dynamique des codes informatiques. Mais, d'autres langages peuvent être envisagés, comme par exemple Small Talk, dès lors qu'ils permettent le chargement et le déchargement dynamique de codes informatiques. Encore plus préférentiellement, les codes de programmes satisfont aux recommandations CVM (pour « C Virtual Machine », la lettre C désignant à la fois le mot « compact », le mot « connected », l'expression « consume-oriented » et le langage C), afin de permettre au dispositif son implantation dans un équipement de réseau, y compris dans un ordinateur portable.

Mais, bien entendu, le module de traitement EMA pourrait être réalisé sous la forme d'une combinaison de circuits électroniques (ou « hardware ») et de modules logiciels.

Le module d'interface fonctionnelle MIF est plus particulièrement chargé de l'échange d'informations tant avec le système de gestion NMS qu'avec les équipements de réseau NE-ij, via le module de traitement EMA, et notamment son module de médiation MM. Il comprend une interface de supervision SUP (ou « supervision interface »), notamment chargée de récupérer des informations provenant des équipements NE-ij du réseau, comme par exemple des alarmes et des événements, pour les communiquer au système de gestion NMS afin qu'il administre et gère lesdits équipements. Cette récupération d'informations s'effectue via le module de traitement EMA, et notamment via son module de gestion d'alarme et d'événement MGAE, et compte tenu des données de description contenues dans les descripteurs MD-p. Comme indiqué précédemment, l'administration des équipements NE-ij concerne notamment la gestion de la topologie du réseau. Elle s'effectue via le module de traitement EMA, et notamment via son module d'administration d'équipement MAN et son module serveur MAD.

Certaines informations peuvent être également récupérées de façon automatique. A cet effet, le module de traitement EMA peut comporter un module d'interrogation (ou « polling ») MI, couplé à l'arbre d'informations de gestion MIT et la mémoire MEM, contenant les modules de description MD-p, et chargé d'interroger, de préférence de façon cyclique, des équipements (passifs) qui ne fournissent pas spontanément les informations représentatives de leur état de fonctionnement. Ce module d'interrogation MI peut être en outre couplé à une mémoire de type « registration repository ». Un tel module MI est notamment utile dans les réseaux d'accès comportant de nombreux équipements, et dans les réseaux passifs.

Le module de supervision SUP est préférentiellement agencé sous la forme d'une interface publique de type IDL fondée, de préférence, sur les recommandations T1M1 (Q816, X780 et M3120). Par ailleurs, la représentation interne des alarmes et événements satisfait préférentiellement aux standards ITU X733 et X721 afin d'offrir une compatibilité avec les anciens systèmes de gestion reposant sur une ancienne version du protocole de gestion Q3.

Grâce à ce type d'interface de supervision, l'utilisateur peut naviguer librement d'une application à l'autre comme s'il disposait d'un unique élément de gestion et non de plusieurs mis en parallèle.

Le module d'interface fonctionnelle MIF comprend également une interface d'alimentation PRO (ou « provisioning interface »), notamment chargée de la transmission aux équipements NE-ij et/ou au module de traitement EMA des informations provenant du système de gestion NMS, ainsi que de la mise à disposition du système de gestion NMS d'informations contenues dans l'arbre d'informations de gestion MIT. Un tel module d'alimentation PRO comprend des fichiers de codes de programmes qui sont préférentiellement encapsulés dans ce que l'homme de l'art appelle des modules de type « north-plug » NP. Grâce à ce type d'interface de navigation, l'utilisateur peut construire une médiation permettant, d'une première part, de définir quel objet interne est utile à une opération d'alimentation (« provisioning »), comme par exemple la pertinence d'un port, d'une deuxième part, de manipuler les objets internes définis, comme par exemple demander l'état de connectivité d'un port, et d'une troisième part, de créer un canal de communication CC dédié au transport de codes particuliers, par exemple de type ASCII, entre une plaque de connexion (ou « socket ») et le module de traitement EMA.

L'interface d'alimentation PRO est matérialisée sur la figure 2 par des pointillés car, comme illustré sur la figure 3, elle est préférentiellement intégrée dans le module de traitement EMA. Dans ce cas, elle est couplée à l'arbre d'informations de gestion MIT ainsi qu'au bus CORBA B.

Le module d'interface système MIS est plus particulièrement chargé de l'intégration, ou en d'autres termes de l'organisation du dialogue entre le système de gestion NMS et le dispositif D. Il comprend une interface de navigation NAV (ou « navigation interface »), notamment chargée de gérer le dialogue entre le système de gestion NMS, d'une part, et l'interface graphique GUI, configurée par le module de médiation MM, et le module de traitement EMA, d'autre part, via des interfaces de type CDE ou Tooltalk, ou des interfaces propriétaires orientées messages, comme par exemple NAVCON, ou encore des interfaces aux standards internet. Il est également possible d'adjoindre une interface de programmation de type Java API pour accroître encore le niveau d'intégration.

Le module d'interface graphique GUI peut être utilisé en mode « application » comme en mode « applet », permettant ainsi son intégration via une navigation de type « web ».

Le module d'interface système MIS comprend également une interface de persistance PER (ou « persistency interface »), notamment chargée de la mémorisation de données d'informations (ou profils) de gestion, extrait(e)s de la table d'informations de gestion MIT et concernant des équipements associés à certains niveaux de priorité ou des contextes particuliers définis par des politiques de persistance. Ces données d'information de gestion sont préférentiellement stockées dans une mémoire auxiliaire MAX du module de traitement EMA, par l'intermédiaire d'un module de liaison MPM, également appelé « MIT persistency tool », implanté dans le module de traitement EMA et couplé aux modules de description MD-p. Mais la mémoire MAX peut être également externe au module de traitement EMA, voire même au serveur de gestion MS. Il peut notamment s'agir d'une mémoire de type base de données, telle que MySQL, ou bien d'une mémoire de type « fichiers plats » (ou « flat files »).

Cette interface de persistance PER comprend préférentiellement, et notamment, une interface de programmation d'application (ou API pour « Application Programming Interface »), par exemple de type JDBC afin de permettre une intégration avec des bases de données relationnelles existantes.

Grâce à l'invention, il suffit de disposer de la correspondance entre les protocoles de gestion utilisés par des équipements de réseau et le protocole de gestion utilisé par un système de gestion NMS pour s'assurer du dialogue entre ce système de gestion NMS et ces équipements. Par conséquent l'invention assure une portabilité totale, tant matérielle (hardware) que contextuelle, du fait du découplage entre le décodage syntaxique et l'exploitation sémantique offert par les modules d'adaptation de protocole.

Par ailleurs, l'invention est compatible avec tout type d'équipement de réseau et tout type de matériel impliqué dans la gestion de réseau.

L'invention ne se limite pas aux modes de réalisation de dispositif de gestion D et de serveur de gestion MS décrits ci-avant, seulement à titre d'exemple, mais elle englobe toutes les variantes que pourra envisager l'homme de l'art dans le cadre des revendications ci-après.

Ainsi, on a décrit un dispositif de gestion implanté dans un serveur de gestion d'un système de gestion de réseau (NMS). Mais, le dispositif de gestion pourrait être implanté dans un équipement de réseau ou bien dans un terminal dédié à la gestion locale d'équipement(s), également appelé « craft terminal ».

Par ailleurs, on a décrit un dispositif de gestion comprenant un module de médiation, des modules d'adaptation de protocoles, une table d'informations de gestion MIT, un bus de liaison, une interface graphique GUI, un module d'interface système et un module d'interface fonctionnelle. Mais, le dispositif selon l'invention peut être réalisé plus simplement, dès lors qu'il comprend au moins un module de médiation couplé à des modules d'adaptation de protocoles.

## Revendications

1. Dispositif de gestion (D) pour un réseau de communications (N) comportant une multiplicité d'équipements de réseau (NE-ij) associés chacun à un protocole de gestion de données primaires, ledit dispositif (D) comprenant des moyens de médiation (MM) couplés auxdits équipements (NE-ij) et à des moyens d'interface fonctionnelle (MIF) et des moyens d'interface système (MIS) couplés à un système de gestion de réseau (NMS), **caractérisé en ce qu'**il comprend des modules d'adaptation de protocole (PA-j), en nombre au moins égal au nombre de protocoles de gestion associés auxdits équipements, et agencés chacun i) pour transformer des données primaires, provenant d'un équipement (NE-ij) selon un protocole de gestion, en données secondaires adaptées auxdits moyens de médiation (MM), et ii) pour transformer des données secondaires, destinées à un équipement (NE-ij), en données primaires selon un protocole de gestion adapté audit équipement, et **en ce que** lesdits moyens de médiation (MM) sont agencés, à réception de données primaires ou secondaires, pour déterminer l'équipement (NE-ij) associé puis alimenter le module d'adaptation de protocole (PA-j) correspondant audit équipement déterminé.

2. Dispositif selon la revendication 1, **caractérisé en ce qu'**à réception d'une demande désignant l'un desdits équipements (NE-ij), lesdits moyens de médiation (MM) sont agencés pour générer un arbre d'informations de gestion (MIT) représentatif des liens dudit équipement désigné avec les autres équipements dudit réseau (N).

3. Dispositif selon la revendication 2, **caractérisé en ce que** lesdits moyens de médiation (MM) sont agencés, après avoir généré ledit arbre d'informations de gestion (MIT), pour configurer un module d'interface graphique (GUI) en fonction de données auxiliaires représentatives dudit équipement désigné (NE-ij).

4. Dispositif selon la revendication 2, **caractérisé en ce qu'**il comprend ledit module d'interface graphique (GUI) configurable.

5. Dispositif selon l'une des revendications 3 et 4, **caractérisé en ce qu'**il comprend des modules de description (MD-p) associés chacun à au moins un élément de l'un desdits équipements (NE-ij) et comportant lesdites données auxiliaires

6. Dispositif selon la revendication 5, **caractérisé en ce que** chaque module de données de description (MD-p) est constitué d'au moins un descripteur.

7. Dispositif selon la revendication 6, **caractérisé en ce que** chaque descripteur est constitué d'au moins un fichier de codes de programme et d'au moins un fichier de configuration.

8. Dispositif selon la revendication 7, **caractérisé en ce que** l'un desdits fichiers de codes de programme d'un descripteur comporte des premières données désignant un type auquel appartient un équipement de réseau (NE-ij), et un autre desdits fichiers de codes de programme dudit descripteur comporte des secondes données désignant une définition de base d'informations de gestion associée audit équipement (NE-ij).

9. Dispositif selon l'une des revendications 3 à 8, **caractérisé en ce que** ledit module d'interface graphique (GUI) et lesdits moyens de médiation sont couplés par un bus (B) de type CORBA.

10. Dispositif selon l'une des revendications 2 à 9, **caractérisé en ce qu'**il comprend lesdits moyens d'interface fonctionnelle (MIF).

11. Dispositif selon la revendication 10, **caractérisé en ce que** lesdits moyens d'interface fonctionnelle (MIF) comprennent un module d'alimentation (PRO) agencé pour extraire sur ordre des informations de gestion, concernant un équipement (NE-ij) et contenues dans ledit arbre de gestion (MIT), de manière à les transmettre audit équipement.

12. Dispositif selon la revendication 11, **caractérisé en ce que** lesdits moyens d'alimentation (PRO) comprennent des fichiers de codes de programme encapsulés dans des modules de type « north-plug » (NP).

13. Dispositif selon l'une des revendications 11 et 12, **caractérisé en ce que** lesdits moyens d'alimentation (PRO) sont agencés pour générer un canal de communication (CC) dédié au transport de codes choisis entre au moins une plaque de connexion et lesdits moyens de médiation (MM).

14. Dispositif selon l'une des revendications 11 à 13, **caractérisé en ce que** lesdits moyens d'interface fonctionnelle (MIF) comprennent un module de supervision (SUP) propre à permettre audit système de gestion de réseau (NMS) d'administrer lesdits équipements (NE-ij) et de gérer des alarmes et des événements provenant desdits équipements (NE-ij), via lesdits moyens de médiation (MM).

15. Dispositif selon la revendication 14, **caractérisé en ce que** ledit module de supervision (SUP) est agencé sous la forme d'une interface publique de type IDL.

16. Dispositif selon l'une des revendications 1 à 15, **caractérisé en ce qu'**il comprend lesdits moyens d'interface système (MIS).

17. Dispositif selon la revendication 16, **caractérisé en ce que** lesdits moyens d'interface système (MIS) comprennent un module de navigation (NAV) agencé pour permettre audit système de gestion de réseau (MS) de contrôler ledit module d'interface graphique configuré (GUI) et lesdits moyens de médiation (MM).

18. Dispositif selon l'une des revendications 16 et 17, **caractérisé en ce que** lesdits moyens d'interface système (MIS) comprennent un module de persistance (PER) agencé pour permettre la mémorisation de certaines données d'information contenues dans ledit arbre d'informations de gestion (MIT) et relatives à des équipements (NE-ij) associés à un niveau de priorité choisi.

19. Dispositif selon la revendication 18, **caractérisé en ce que** ledit module de persistance (PER) comprend une interface de programmation d'application.

20. Dispositif selon la revendication 19, **caractérisé en ce que** ladite interface de programmation d'application est de type JDBC.

21. Dispositif selon l'une des revendications 1 à 20, **caractérisé en ce que** l'un au moins desdits moyens de médiation (MM), module d'interface graphique configurable (GUI), moyens d'interface fonctionnelle (MIF) et moyens d'interface système (MIS) est constitué de fichiers de codes de programme.

22. Serveur de gestion (MS) d'un système de gestion de réseau (NMS), **caractérisé en ce qu'**il comprend un dispositif de gestion (D) selon l'une des revendications précédentes.

23. Equipement de réseau (NE-ij), **caractérisé en ce qu'**il comprend un dispositif de gestion (D) selon l'une des revendications 1 à 21.

24. Utilisation du dispositif de gestion (D), serveur de gestion (MS) et équipement de réseau (NE-ij) selon l'une des revendications précédentes dans les technologies réseaux devant être gérées.

25. Utilisation selon la revendication 24, **caractérisé en ce que** lesdites technologies réseaux sont choisies dans un groupe comprenant les réseaux de transmission, en particulier de type WDM, SONET et SDH, de données, en particulier de type Internet-IP et ATM, et de voix, en particulier de type classique, mobile et NGN.
